# EUROPEAN PATENT APPLICATION

(11) **EP 1 003 304 A1**
(43) Date of publication of application: **24.05.2000**
(21) Application number: 99919570.4
(22) Date of filing: 13.05.1999
(51) Int. Cl.: H04L 12/18, H04H 1/00, H04N 7/08

(54) **SYSTEM FOR PROVIDING CONTENTS**

(30) Priority: 13.05.1998 JP 13039298; 30.07.1998 JP 21580898
(71) Applicant: Sony Corporation, Tokyo 141-0001 (JP)
(72) Inventor: NISHIO, Fumihiko, Sony Corporation, Tokyo 141-0001 (JP); GONNO, Yoshihisa, Sony Corporation, Tokyo 141-0001 (JP); HARAOKA, Kazuo, Sony Corporation, Tokyo 141-0001 (JP); YAMAGISHI, Yasuaki, Sony Corporation, Tokyo 141-0001 (JP); KATAYAMA, Yasushi, Sony Corporation, Tokyo 141-0001 (JP)
(74) Representative: Melzer, Wolfgang, Dipl.-Ing.
(86) International application number: JP9902492
(87) International publication number: WO9959290

(57) **Abstract**

There is provided a content providing system for efficiently providing data.

The system comprises a content data storage section 21, a meta-information storage section 22 for storing meta-information, a meta-information schema storage section 23 for storing a meta-information schema indicating the data configuration of meta-information, a meta-information converter section 24 for converting the data format of meta-information into a predetermined transfer format, a meta-information schema converter section 25 for converting the data format of the meta-information schema into the predetermined transfer format, and a transfer section 26 for transmitting the meta-information and the meta-information schema converted into the predetermined transfer format, and the content data. The transmitter apparatus 21 converts the meta-information and the meta-information schema into a predetermined transfer format, and then transmits them.

## Description

### Technical Field

The present invention relates to a contents providing system for providing an unspecified number of users with contents, a contents providing apparatus, a contents receiving apparatus, a method of providing a contents signal, and a method of receiving meta-information.

### Background Art

Many conventional methods have been proposed for a signal providing system for content data.

For example, providing of content data based on the WWW (World Wide Web) using HTTP (Hyper Text Transfer Protocol) is achieved on the Internet. From a huge group of content data like on the WWW, it is very difficult to obtain necessary content data. Therefore, on the WWW, each piece of content data is generally added with meta-information which represents what the contents are. Necessary content data can be selected by retrieving the meta-information, with use of a receiving apparatus.

For example, PICS (Platform for Internet Content Selection), RDF (Resource Description Framework), or the like has been proposed for meta-information thus added on the WWW.

Also, for example, in digital television broadcasting, data is provided with use of MPEG-2. In this digital television broadcasting, meta-information such as a program title, on-air time, and the like is supplied in the form of EIT (Event Information Table), for example, with use of EPG (Electric Program Guide).

In recent years, unification of transmission media has progressed, and multiple-address networks such as digital television broadcasting and the like have been united with interactive networks such as the Internet and the like.

If information which is conventionally transmitted through an interactive network such as internet or the like is transmitted through a multiple-address network such as digital television broadcasting or the like, meta-information and the like such as PICS and RDF which have been developed in the interactive networks must be transmitted through the multiple-address network. In addition, meta-information according to PICS and RDF is described in a text format and will therefore cause a low transfer efficiency.

In addition, if information which is conventionally transmitted through the interactive network such as the Internet or the like is transmitted through a multiple-address network such as digital television broadcasting or the like, the receiver side selectively receives transmitted meta-information in general cases. In this case, high-speed filtering is required to select necessary meta-information. However, if meta-information is written in a text format, it is difficult to perform high-speed filtering.

Meta-information in form of the EIT in digital television broadcasting is transferred with a predetermined data configuration, and the data configuration is difficult to change. Therefore, it is very difficult to additionally include meta-information such as PICS or RDF, which has been developed on the WWW, into the EIT.

### Disclosure of the Invention

The present invention has an object of providing a content providing system capable of efficiently providing contents and flexibly selecting a content.

The present invention also has an object of providing a content providing apparatus capable of efficiently providing contents.

The present invention also has an object of providing a content receiver apparatus capable of flexibly selecting and receiving contents.

The present invention also has an object of providing a method of efficiently providing a content signal, by which contents can be efficiently provided.

The present invention also has an objet of providing a method of receiving meta-information, by which contents can be flexibly selected and received.

A content providing system according to the present invention comprises a content providing apparatus and a content receiver apparatus, wherein the content providing apparatus includes providing means for providing a content signal to the content receiver apparatus, meta information storage means for storing meta information concerning the content signal, providing-side meta information schema storage means for storing a meta-information schema indicating a data configuration of the meta-information, and transmitter means for transmitting the meta-information and the meta-information schema to the content receiver apparatus through a communication channel, and wherein the content receiver apparatus includes receiver means for receiving the meta-information and the meta-information schema transmitted from the transmitter means of the content providing apparatus, receiving-side meta-information schema storage means for storing the meta-information schema received by the receiver means, and meta-information data configuration detector means for detecting a data configuration of the meta-information received by the receiver means, based on the meta-information schema stored in the receiving-side meta-information schema.

In the content providing apparatus described above, the content providing apparatus transmits a meta-information schema indicating a data configuration of meta-information concerning a content signal, and also transmits the content to the content receiver apparatus. Contents are thus supplied to the content receiver apparatus. Further, in this content providing system, the content receiver apparatus receives the meta-information schema, and also receives the meta-information. Based on the meta-information schema, the content receiver apparatus detects the data configuration of the received meta-information and receives a content signal related to the received meta-information.

A content providing apparatus according to the present invention comprises providing means for providing a content signal to a content receiver apparatus, meta information storage means for storing meta information concerning the content signal, meta information schema storage means for storing a meta-information schema indicating a data configuration of the meta-information, and transmitter means for transmitting the meta-information and the meta-information schema to the content receiver apparatus through a communication channel.

In the content providing apparatus described above, a meta-information schema indicating a data configuration of meta-information concerning a content signal is transmitted to a content receiver apparatus, and the meta-information is transmitted to the content receiver apparatus. Further, a content is supplied to the content receiver apparatus.

A content receiver apparatus according to the present invention comprises meta-information schema storage means for storing a meta-information schema indicating a data configuration of meta-information concerning a content signal, receiver means for receiving the content signal and meta-information concerning the content signal through a communication channel, and meta-information data configuration detector means for detecting a data configuration of the meta-information received by the receiver means, based on the meta-information schema stored in the meta-information schema storage means.

The content receiver apparatus described above receivers a meta-information schema indicating the data configuration of meta-information concerning a content signal, and also receives the meta-information. Based on the meta-information schema, the content receiver apparatus detects the data configuration of the received meta-information, and also receives a content signal related to the received meta-information.

A method of providing a content signal, according to the present invention, comprises steps of transmitting a meta-information schema indicating a data configuration of meta-information concerning a content signal to a content receiver apparatus through a communication channel, transmitting the meta-information to the content receiver apparatus through the communication channel, and providing the content signal to the content receiver apparatus.

A method of receiving meta-information, according to the present invention, comprises steps of receiving a meta-information schema indicating a data configuration of meta-information concerning a content signal, receiving the meta-information, and detecting a data configuration of the received meta-information, based on the meta-information schema.

### Brief Description of the Drawings

FIG. 1 is a diagram for explaining a content providing system to which the present invention is applied.
FIG. 2 is a diagram showing the structure of a broadcasting station in the content providing system.
FIG. 3 is a diagram showing the structure of a receiver terminal of the content providing system.
FIG. 4 is a view for explaining a meta-information schema based on a PICS data model.
FIG. 5 is a view for explaining a meta-information schema of a predetermined transfer format.
FIG. 6 is a view showing an example in case where a meta-information schema based on the PICS data model shown in FIG. 4 is converted into a meta-information schema of the predetermined format shown in FIG. 5.
FIG. 7 is a view for explaining meta-information based on the PICS data model.
FIG. 8 is a view for explaining meta-information of a predetermined transfer format.
FIG. 9 is a view for explaining information described in a meta-information filtering mask in meta-information of the predetermined transfer format.
FIG. 10 is a view showing a specific example of meta-information of the predetermined transfer format.
FIG. 11 is a view showing another specific example of meta-information of the predetermined transfer format.
FIG. 12 is a view for explaining locator information in meta-information of the predetermined transfer format.
FIG. 13 is a view showing a dialog box displayed by a profile generator section of the receiver terminal shown in FIG. 3.
FIG. 14 is a view for explaining profile information generated by the profile generator section.
FIG. 15 is a flowchart showing the contents of processing by the receiver terminal shown in FIG. 3.
FIG. 16 is a flowchart showing the detailed contents of the data receive processing shown in FIG. 15.
FIG. 17 is a view for explaining a RDF data model.
FIG. 18 is a view showing description of a program genre hierarchy and description of a parental guide hierarchy, bit pattern information for generating a filtering mask after converting these pieces of information into a predetermined transfer format, and a filtering mask bit pattern with respect to a certain content.
FIG. 19 is a view showing an example of a format when storing a filtering mask bit pattern into a section formation according to the MPEG-2 system.
FIG. 20 is a view showing another example of a format when storing a filtering mask bit pattern into a section format according to the MPEG-2 system.

### Best Mode for Carrying out the Invention

In the following, best modes of the embodiments according to the present invention will be explained with reference to the appended drawings.

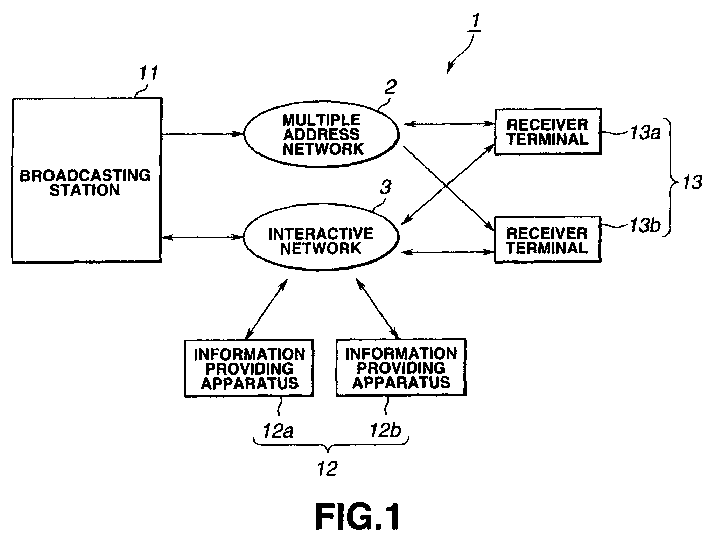

FIG. 1 shows an example of the structure of a content providing system to which the present invention is applied.

The content providing system 1 to which the present invention is applied includes a broadcasting station 11 which provides content data through a multiple-address network 2 such as cable broadcasting or satellite broadcasting, information providing apparatus 12 (12a and 12b) which provides content data through an interactive network 3 such as Internet or the like, and a receiver terminal 13 (13a and 13b) which obtains content data from the broadcasting station 11 or the information providing apparatus 12.

Based on a database, the broadcasting station 11 manages content data to be provided, meta-information concerning the content data, and a meta-information schema indicating the data configuration of the meta-information. The broadcasting station 11 provides the receiver terminal 13 with the content data, meta-information, and meta-information schema. The information providing apparatus 12 manages content data to be provided, meta-information concerning the content data, and a meta-information schema indicating the data configuration of the meta-information, with use of a database. The information providing apparatus 12 provides the receiver terminal 13 with the content data, meta-information, and meta-information schema. Note that the information providing apparatus 12 once transmits the content data, meta-information, and meta-information schema, which are managed on its own database, to the broadcasting station 11 through the interactive network 3, and thereafter provides them also to the receiver terminal 13 through the multiple-address network 2.

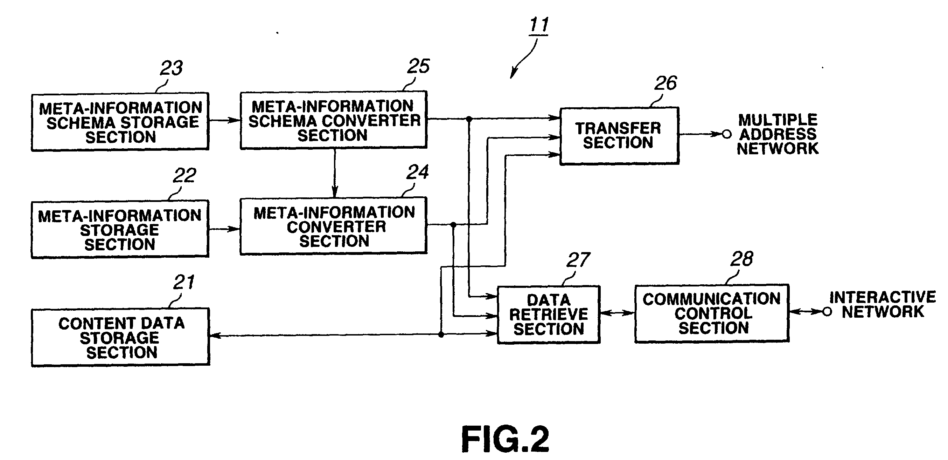

FIG. 2 shows the structure of the broadcasting station 11 of the content providing system 1.

The broadcasting station 11 includes a content data storage section 21 for storing content data, a meta-information storage section 22 for storing meta-information, a meta-information schema storage section 23 for storing a meta-information schema, a meta-information converter section 24 for converting meta-information into a predetermined transfer format, a meta-information schema converter section 25 for converting a meta-information schema into a predetermined transfer format, a transfer section 26 for transferring content data, meta-information converted into a predetermined transfer format, and a meta-information schema through the multiple-address network 2, a data retrieve section 27 for retrieving content data or the like upon request from the receiver terminal 13, and a communication control section 28 for transferring the retrieved content data or the like through the interactive network 3.

The content data storage section 21 stores content data to be provided for the receiver terminal 13. The content data to be provided is, for example, television program data or the like for broadcasting. Note that the content data storage section 21 may store program data or the like written according to HTTP.

The meta-information storage section 22 stores meta-information concerning the content data stored in the content data storage section 21.

Meta-information used herein is information which describes attributes and the like of content data and is provided for the receiver terminal 13, for example, added to content data. Meta-information describes attributes of content data classified into one or more articles. For example, in case where television program data is provided as content data, attributes classified into a plurality of articles are described in the meta-information of the content data, e.g., the program title of the television program data is "News at Seven O'clock", the program genre of the television program data is "News", the on-air time of the television program data is "7:00 to 7:30", the parental guide of the television program data is "G". Also, in case where program data is provided as content data through a network such as data broadcasting, internet, or the like, attributes thereof classified into a plurality of articles are described in the meta-information of the content data, e.g., the program title of the program data is "∼ Game", the program genre of the program data is "Game Program", and the OS (Operating System) compatible with the program data is "Windows 95 (commercial name)". The meta-information storage section 22 stores pieces of meta-information in data formats respectively corresponding to pieces of content data. For example, the meta-information storage section 22 stores meta-information pieces in data formats of plural types which have no compatibility in description formats, such tat the data formats of the meta-information pieces respectively correspond to the data formats of their own content data pieces, e.g., meta-information based on a PICS data model, meta-information based on a RDF data model, and meta-information in the EIT format which describes a program title, on-air time, and the like.

The meta-information schema storage section 23 stores meta-information schema indicating the data configuration of meta-information stored in the meta-information storage section 22.

The meta-information schema used herein is information which defines the data configuration of meta-information. The meta-information schema is used by the receiver terminal 13 to translate the content of the meta-information added to content data to be provided. Attributes of content data classified into a plurality of articles are described in the meta-information, and the meta-information schema defines what kind of attribute is included in which layout in the meta-information, for every article.

For example, in case where television program data is provided as content data, the meta-information thereof describes attributes of "Program Title: News at 7 O'clock", "Program Genre: News", "On-Air Time: 7:00∼7:30", and "Parental Guide: G". Correspondingly, the meta-information schema defines that the attributes of the meta-information are described, classified into the articles of "Program Title", "Program Genre", "On-Air Time", and "Parental Guide". The meta-information schema further defines specific contents of the attributes described in the articles. The specific attributes described in the articles are as follows. For example, in case of an article of "Program Genre", the specific attribute is "Cinema", "News", "Sports", or the like. In case of an article of "On-Air Time", the specific attribute is "7:00∼7:30", "7:30∼8:00", "8:00∼8:30", or the like.

For example, in case where program data is provided as content data, the meta-information describes attributes of "Program Title: ∼ Game", "Program Genre: Game Program", and "Compatible OS: Windows 95 (commercial name)". Correspondingly, the meta-information schema defines that the attributes of this meta-information are described, classified into the articles of "Program Title", "Program Genre", and "Compatible OS". The meta-information schema further defines specific contents of the attributes described in the articles and the layout of the attributes. The specific attributes described in the articles are as follows. For example, in case of an article of "Program Genre", the specific attribute is "Still Image Data", "Audio Data", "Game", or the like. In case of an article of "Compatible OS", the specific attribute is "Windows 98 (commercial name)", "Mac OS (commercial name)", or the like.

Since the meta-information is defined in this manner, the receiver terminal 13 is capable of translating, upon receipt of content data, the contents described in the meta-information thereof for every classified article with use of the meta-information schema thereof, thereby to determine the attributes of the content data.

Also, the description format and the data contents of the meta-information differ and can be updated, depending on the type of the receiver terminal to which a content is provided and on the contents of the content. For example, if one same content is changed as the time elapses and the meta-information thereof is changed, the meta-information thereof can be updated in accordance with the change made on the contents of the content since the meta-information has one same data configuration.

The meta-information schema storage section 23 stores a plurality of meta-information schemas and identifies the meta-information schemas by IDs, so as to respond to updating of the meta-information and to the differences between description formats of the meta-information. For example, the meta-information schema storage section 23 stores a plurality of meta-information schemas, e.g., a meta-information schema which defines that meta-information describes attributes classified into articles of "Program Title", "Program Genre", "On-Air Time", and "Parental Guide" as described above, and a meta-information schema which defines that meta-information describes attributes classified into articles of "Program Title", "Program Genre", and "Compatible OS". An ID is added to every of these meta-information schemas, so that these schemas are identified. Also, this meta-information storage section 22 stores meta-information such that the meta-information contains the same ID as that added to the meta-information schema related thereto.

Also, meta-information is provided as an appendix to content data provided for the receiver terminal 13. However, a meta-information schema may be provided for the receiver terminal 13 either as an appendix to content data or as independent information before providing the content data. In the case where a meta-information schema is independently provided for a receiver terminal 13 before providing content data, the meta-information schema may be provided through communication via a multiple-address network 2 or by another method of using a recording medium, such as an optical disk, a memory card, or the like.

The meta-information converter section 24 converts meta-information stored in the meta-information storage section 22, into a predetermined transfer format. There is a case that the description format of meta-information stored in the meta-information storage section 22 differs for every content data piece or for every information providing apparatus 12. For example, the meta-information storage section 22 stores meta-information of a plurality of different description formats, such as meta-information based on a PICS data model, meta-information based on a RDF data model. However, the meta-information is converted into a predetermined transfer format by the meta-information converter section 24 and is then provided for a receiver terminal 13.

The meta-information schema converter section 25 converts a meta-information schema stored in the meta-information schema, into a predetermined transfer format. There is a case that the description format of the meta-information schema stored in the meta-information schema storage section 25 differs for every content data to be dealt with, or for every information providing apparatus 12 which provides content data. For example, the meta-information schema storage section 25 stores meta-information schemas of a plurality of different description formats, such as a meta-information schema based on the PICS data model, a meta-information schema based on the RDF data model, and the like. However, the description format of each meta-information schema is converted into one same predetermined transfer format by the meta-information schema converter section 25 and is then provided for a receiver terminal 13.

The transfer section 26 transfers the meta-information converted into a predetermined transfer format, the meta-information schema converted into a predetermined transfer format by the meta-information schema converter section 25, and content data stored in the content data storage section 21, to a receiver terminal 13 through a multiple-address network 2, for example, by multi-layering the meta-information, schema, and content data.

The data retrieve section 27 retrieves content data, meta-information, and a meta-information for which a transfer request is made through the interactive network 3 from a receiver terminal 13.

The communication control section 28 extracts the content data, meta-information, and meta-information schema retrieved by the data retrieve section 27, and transmits them to the receiver terminal 13 through the interactive network 3. Note that this communication control section 28 multi-layers the meta-information converted into a predetermined transfer format by the meta-information converter section, the meta-information schema converted into a predetermined transfer format by the meta-information schema converter section 25, and the content data stored in the content data storage section 21 and transfers then to the receiver terminal 13, like in the transfer section 26.

In the broadcasting station 11 having the structure as described above, the description formats of the meta-information and the meta-information schema which differ for every piece of content data are converted into a predetermined transfer format, and can be transferred together with the content data to the receiver terminal 13.

Also, the information providing apparatus 12 of the content providing system 1 manages the content data to be provided, the meta-information related to the content data, and the meta-information schema indicating the data configuration of the meta-information, with use of a database. The content data provided by the information providing apparatus 12 are, for example, pages on the WWW and the like. The information providing apparatus 12 provides a broadcasting station 11 or a receiver terminal 13 with the content data, meta-information, and meta-information schema, through the interactive network 3. Also, the information providing apparatus 12 provides the broadcasting station 11 with the content data, meta-information, and meta-information schema managed on the database, through the interactive network 3, and can further provide them to the receiver terminal 13 through the multiple-address network 2. Also, the broadcasting station 11 and the information providing apparatus 12 may transmit the meta-information and meta-information schema to the receiver terminal 13 through the multiple-address network 2 or the interactive network 3, and many transmit the content data stored in the content data storage section 21 of the broadcasting station 11 or the information providing apparatus 12, in response to a request from the receiver terminal 13 which has received the meta-information and meta-information schema.

The information providing apparatus 12 has the same structure as the broadcasting station 11 except that the apparatus 12 does not include the transfer section 26 for transferring data to the multiple-address network 2.

The information providing apparatus 12 is capable of converting the format of meta-information and a meta-information schema, which differs for every piece of content data or from the description formats of other information providing apparatuses, into a predetermined transfer format, and can then transfer them together with content data to a receiver terminal 13.

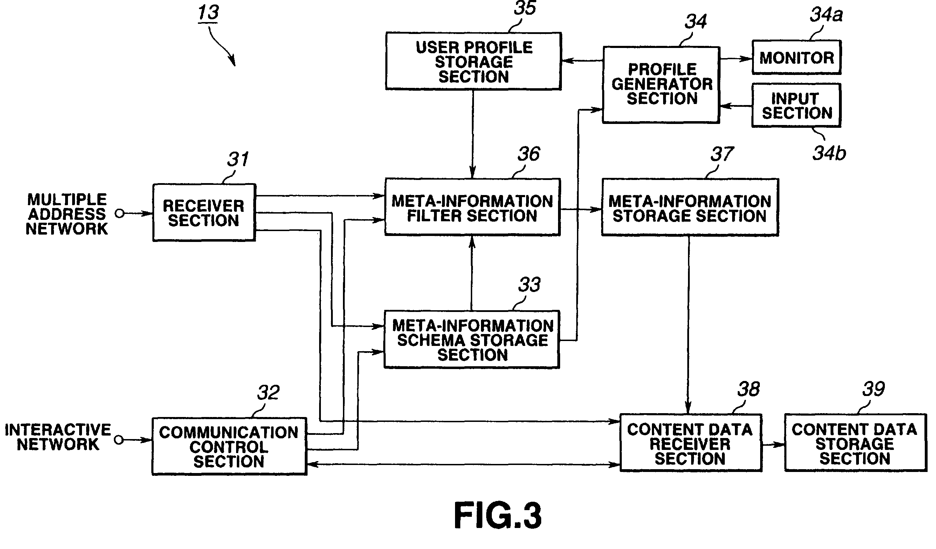

FIG. 3 shows the structure of the receiver terminal 13 in the content providing system 1.

The receiver terminal 13 comprises a receiver section 31 for receiving content data, meta-information, and a meta-information schema provided through a multiple network 2, a communication control section 32 for receiving content data, meta-information, and a meta-information schema provided through an interactive network 3, an information schema storage section 33 for storing the received meta-information schema, a profile generator section 34 for generating profile information based on an operation input by a user, a user profile storage section 35 for storing the generated profile information, a meta-information filter section 36 for filtering the received meta-information based on the profile information, a meta-information storage section for storing the filtered meta-information, a content data receiver section 38 for obtaining content data corresponding to the filtered meta-information, and a content data storage section 39 for storing the obtained content data. Note that the profile generator section 34 is provided with a monitor 34a and an input section 34b.

The receiver section 31 receives content data, meta-information, and a meta-information schema provided through the multiple-address network 2 from the broadcasting station 11.

The communication control section 32 requests the broadcasting station 11 or the information providing apparatus 12 to provide content data or the like, through the interactive network 3, and receives content data, meta-information, and a meta-information schema which are provided in response to the request.

The meta-information schema storage section 33 stores the received meta-information schema. The meta-information schema stored in the meta-information schema storage section 33 may be previously stored prior to providing of content data. Note that a meta-information schema stored in the meta-information schema storage section 33 prior to providing of content data may be provided through the multiple-address network 2 and the interactive network 3 or may be provided by another method, e.g., by using a recording medium such as an optical disk, a memory card, or the like.

The profile generator section 34 displays information defined in the meta-information schema stored in the meta-information schema storage section 33, on the monitor 34a. This section 34 also receives an operation input through an input section 34b from a user, and generates profile information specific to the user. For example, the profile generator section 34 displays a plurality of attributes of the meta-information defined in the meta-information schema, classified into articles. The user selects any of the attributes of the content data, with use of an input section 34b including a pointer or the like. Further, this profile generator section 34 generates profile information which specifies the selected attribute of the content data.

For example, in case of a meta-information schema which defines the data configuration of meta-information related to television program data, the meta-information schema thereof defines "Cinema", "News", "Sports" as the "Program Genre", "7:00∼7:30" or "7:00∼7:30" as the "On-Air Time", etc. The profile generator section 34 displays these attributes on the monitor 34a, for example, classified into articles. If the user selects the "Program Genre", a time range, and the like concerning the television program data which the user desires to watch, the profile generator section 34 generates profile information indicating the attributes such as "Program Genre: News", "On-Air Time: 7:00∼7:30", and the like which the user has selected.

Note that the profile generator section 34 need not always generate the profile information in accordance with a selection by a user but may generates profile information with use of a mechanical automatic selection device or the like.

The user profile storage section 35 stores profile information generated by the profile generator section 34.

The meta-information filter section 36 extracts, by filtering, only the meta-information, which matches with the condition, indicated in the profile information, among received meta-information. For example, only the meta-information which describes "Program Genre: News" and "On-Air Time: 7:00∼7:30" is extracted by filtering.

The meta-information storage section 37 stores the meta-information extracted by the meta-information filter section 36.

The content data receiver section 38 is provided with pieces of content data received by the receiver section 31 and the communication control section 32, and obtains a piece of content data which corresponds to the meta-information stored in the meta-information storage section 37.

The content data storage section 39 stores the piece of content data obtained by the content data receiver section 38.

As described above, the receiver terminal 13 obtains content data provided by the broadcasting station 11 and the information providing apparatus 12, meta-information concerning the content data, and a meta-information schema indicating the data configuration of the meta-information, through the multiple network 2 and the interactive network 3. The receiver terminal 13 receives meta-information and meta-information schemas, which always have one same transfer format and do not differ depending on differences between pieces of content data and between types of information providing apparatuses. A user of the content providing system 1 can refer to provided television programs and contents of the WWW with use of the receiver terminal 13.

Further, the receiver terminal 13 is capable of efficiently providing data and of flexibly selecting and receiving data by transferring meta-information and meta-information schemas which achieves improved filtering efficiency and transfer efficiency.

Next, specific explanation will be made of a case where meta-information and meta-information schemas based on a PICS data model are converted into meta-information and meta-information schema of a predetermined transfer format by the meta-information converter section 24 and the meta-information schema converter section 25 of the broadcasting station 11.

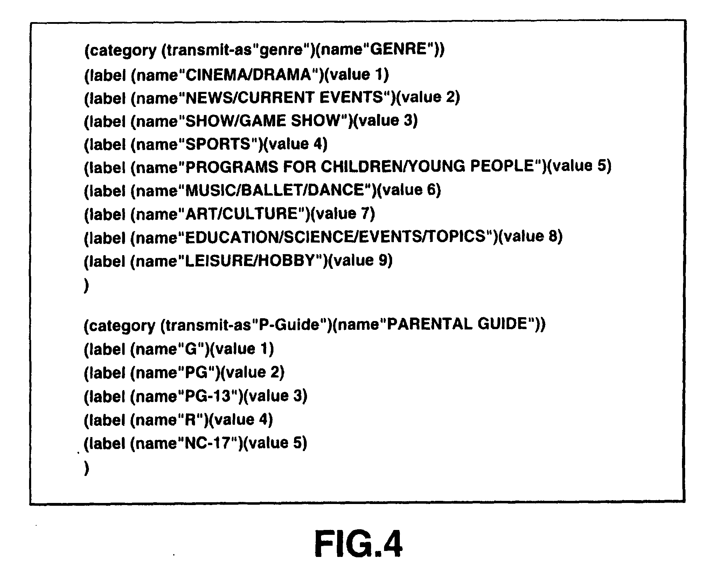

FIG. 4 shows an example of a meta-information schema based on the PICS data model.

The meta-information schema based on this PICS data model comprises a plurality of pieces of category information for classifying the attributes of content data, and a plurality of labels for specifying the attributes of the content data.

In case of a PICS data model, categories such as "Genre" and "Parental Guide" are provided to classify the attributes of content data.

In the PICS data model, as labels which specify the attribute of the category classified into "Genre", there are provided "Cinema or Drama (value 1)", "News or Current Events (Value 2)", "Show or Game Show (Value 3)", "Sports (Value 4)", "Programs for Children and Young People (Value 5)", "Music, Ballet, or Dance (Value 6)", "Art or Culture (Value 7)", "Education, Science, Events, or Topics (Value 8)", and "Leisure or Hobby (Value 9)". Also, in the PICS data model, as the labels which specify the attributes of the category classified into "Parental Guide", there are provided "G(Value 1)", "PG(Value 2)", "PG-13 (Value 3)", "R(Value 4)", and "NC-17 (Value 5)". Note that the combination of an alphabet such as G, PG, or the like and a number represents the ages of audience or the like who can watch the television program.

The contents of the meta-information schema based on this PICS data model are translated by the meta-information schema converter section 25 and are converted into a meta-information schema of a predetermined transfer format.

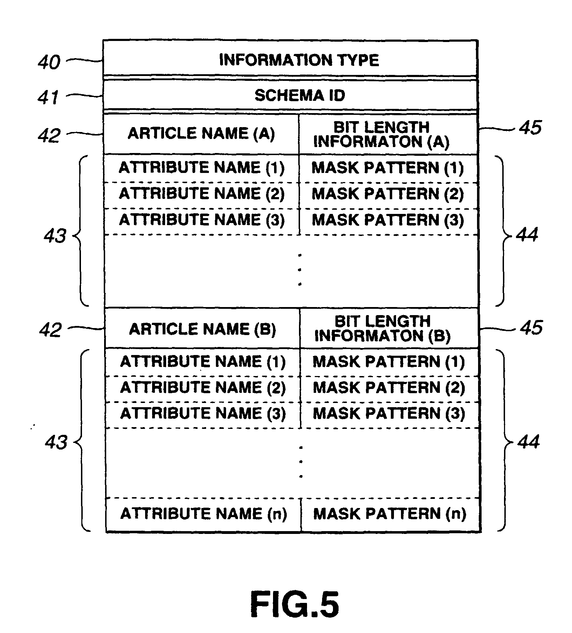

A specific example of a meta-information schema of a predetermined transfer format converted by the meta-information schema converter section 25 is shown in FIG. 5.

A meta-information schema of a predetermined transfer format consists of, for example, information type data 40, a schema ID 41, an article name 42, an attribute name 43 indicating the attribute of the content data in the article name, a mask pattern 44 where the attribute name 43 is expressed as a bit sequence, and bit-length information indicating the bit length of the mask pattern 44.

The information type data 40 is a header which indicates that the data described below the information type data 40 is a meta-information schema.

The schema ID 41 is an ID appended to identify the type of the meta-information schema.

The article name 42 is the name of the article into which the attribute indicated by the meta-information is classified. For example, in case where a meta-information schema of the PICS data model is converted into this predetermined transfer format, a specific name (e.g., "Genre", "Parental Guide", or the like) is described in the article name 42.

The attribute name 43 is the name of the attribute indicated in the meta-information. For example, in case where a meta-information schema of the PICS data model is converted into the predetermined transfer format, a specific name of a label (e.g., "Cinema/Drama", "G", or the like) is described in the attribute name 43. This attribute name 43 is provided, appended to each article name 42 described above, and is also information positioned as a lower layer below the article name 43.

The mask pattern 44 is binary data indicating each attribute name 43. At least one mask pattern 44 is described for every attribute name 43, and each mask pattern 44 has an inherent value which is different from the binary data of another attribute name 43. In addition, mask patterns 44 having an equal bit length are respectively described in the attribute names 43 grouped in one same article name.

The bit length information 44 is information which indicates the bit length of the bet sequence of the mask pattern 44. The value of the bit length information 44 may differ between the article names 42. For example, in case of the PICS data model, the bit length of the mask pattern may differ for every category.

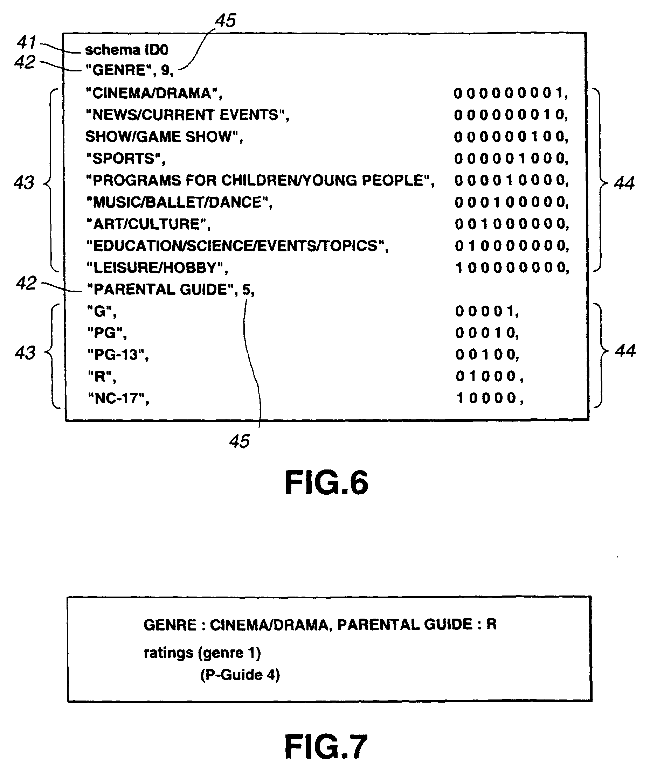

More specifically, FIG. 6 shows an example in which meta-information based on the PICS data model shown in FIG. 4 is converted into the meta-information schema of the predetermined transfer format shown in FIG. 5.

As shown in FIG. 6, for example, "0" is described as a schema ID in the meta-information schema converted into a predetermined transfer format. "Genre" and "Parental Guide" are described as article names 42. As the attribute names 43 in the lower layers below the article name "Genre", "Cinema/Drama", "News/Current Events", "Show/Game Show", "Sports", "Programs for Children/Young People", "Music/Ballet/Dance" "Art/Culture", "Education/Science/Events/Topics", and " Leisure/Hobby" are described. As attribute names 43 in the layers below the article name "Parental Guide", "G", "PG", "PG-13", "R", and "NC-17" are described.

Further, for example, "9" is described as the article "Genre" bit length information 45, so the bit length of each of the mask patterns 44 indicating the attribute names of the article "Genre" is set to 9 bits. Also, for example, "6" is described as the article "Parental Guide" bit length information 45, so the bit length of each of the mask patterns 44 indicating the attribute names of the article "Parental Guide" is set to 5 bits.

Mask patterns 44 which respectively correspond to attribute names 42 classified into the "Genre" are, for example, as follows.
"Cinema/Drama": "000000001"
"News/Current Events": "000000010"
"Show/Game Show": "000000100"
"Sports": "000001000"
"Programs for Children/Young People": "000010000"
"Music/Ballet/Dance": "000100000"
"Art/Culture":"001000000"
"Education/Science/Events/Topics": "010000000"
"Leisure/Hobby": "100000000"

Mask patterns 44 which respectively correspond to attribute names 42 classified into the "Parental Guide" are, for example, as follows.
"G": "00001"
"PG": "00010"
"PG-13": "00100"
"R": "01000"
"NC-17": "10000"

As described, the description format of the meta-information schema based on the PICS data model is converted by the meta-information converter section 25. Note that the binary data described as the mask pattern 44 is limited to those described above but may have any bit length and specific value. Also, for example, in case where the transfer section 26 transfers content data, meta-information, and a meta-information schema by means of a transport stream according to MPEG, a PID (Packet Identification) is appended to identify each of the information. In this case, the meta-information schema to be transferred need not be added with information type data 40. FIG. 7 shows an example of meta-information based on the PICS data model. In the meta-information based on the PICS data model, the attributes of the content data indicated by the meta-information are expressed by describing one label for every category. For example, if the attribute of the content data to be transferred to a user is "Cinema or Drama" and the parental guide thereof is "R", meta-information of "Genre: Cinema/Drama", "Parental Guide: R" is appended to the content data, as shown in FIG. 7.

The contents of the meta-information thus based on the PICS data model are translated and converted into a predetermined transfer format by the meta-information converter section 24.

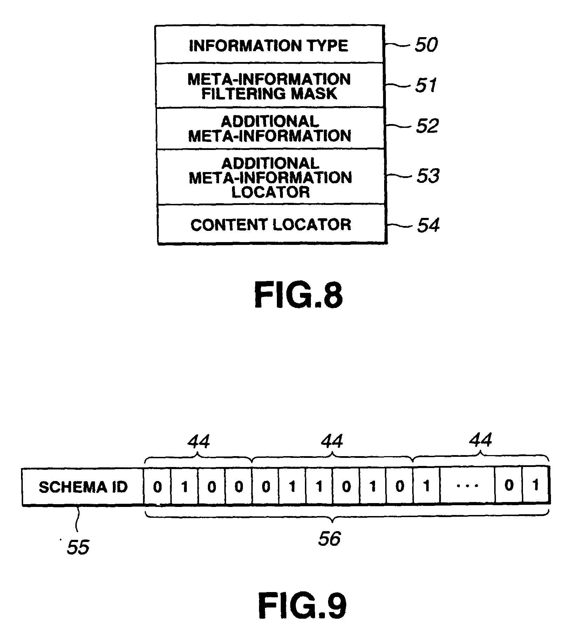

FIG. 8 shows a specific example of meta-information having the predetermined transfer format converted by the meta-information converter section 24.

The meta-information of the predetermined transfer format is constructed by, for example, information type data 50, a meta-information filtering mask 51, additional meta-information 52, an additional meta-information locator 53, and a content locator 54.

The information type data 50 is a header indicating that data indicated below the information type data 50 is meta-information.

The meta-information filtering mask 51 is information indicating the attributes of content data. This meta-information filtering mask 51 is information, attributes of which are converted into binary data by using a meta-information schema of the predetermined transfer format described above.

Specifically, the meta-information filtering mask 51 comprises a schema ID 55 and a filtering mask pattern 56 subsequent to the schema ID 55, as shown in FIG. 9.

The schema ID 55 is information indicating which meta-information schema the meta-information filtering mask 51 corresponds to. For example, this schema ID 55 is the same value as the schema ID 41 described in the meta-information schema of the predetermined transfer format.

The filtering mask pattern 56 is information in which a mask pattern 44 defined in a meta-information schema is used to describe the attributes of the content data indicated by the meta-information. In the filtering mask pattern 56, mask patterns 44 corresponding in number to classified articles are described and disposed, so as to make correspondence to the attributes of content data which are respectively classified into the articles.

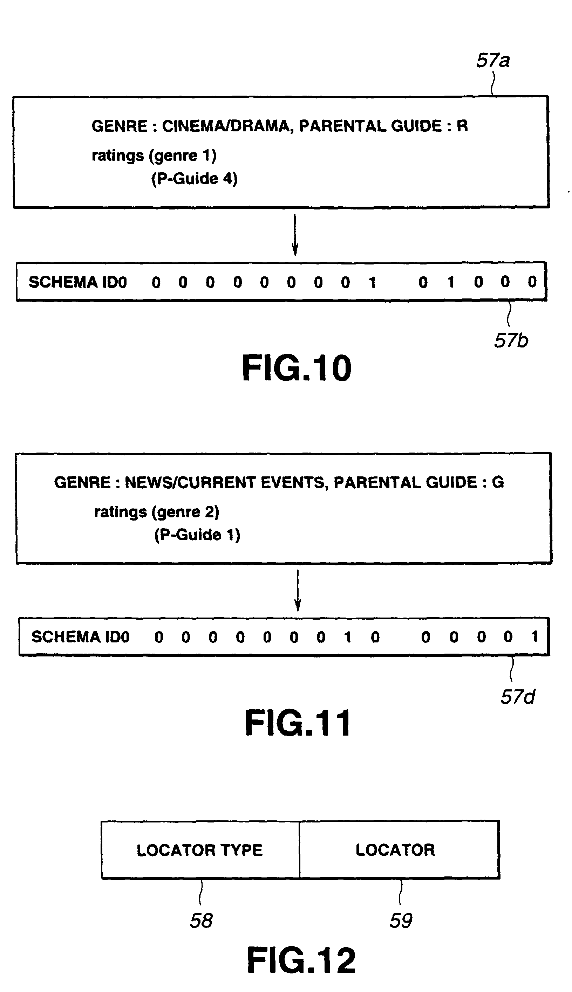

For example, if the meta-information schema of the predetermined transfer format shown in FIG. 6 is referred to and meta-information of this transfer format is generated from meta-information 57a based on a PICS data model of "Genre: Cinema/Drama" and "Parental Guide: R" as shown in FIG. 10, the filtering mask pattern 56 thereof is the meta-information 57b of the predetermined transfer format in which "0" is the schema ID 55 and "000000001" and "01000" are disposed as the filtering mask pattern 56.

Otherwise, if the meta-information schema of the predetermined format shown in FIG. 6 is referred to and meta-information of this transfer format is generated from meta-information 57c based on a PICS data model of "Genre: News/Current Events" and "Parental Guide: G" as shown in FIG. 11, the filtering mask pattern 56 thereof is the meta-information 57d of the predetermined transfer format in which the schema ID 55 is "0" and "000000001" and "01000" are disposed as the filtering mask pattern 56.

The additional meta-information 52 is information which defines those attributes of content data that are not defined by the mask pattern of the meta-information schema of the predetermined transfer format. For example, meta-information concerning television program data generally contain an attribute such as "Program Title" in addition to the attributes classified into the articles of "Genre" and "Parental Guide". The attribute of "Program Title" is difficult to define previously by a meta-information schema, and is therefore described as additional meta-information. Note that this additional meta-information 52 may be described if necessary, e.g., if there is an attribute which cannot be described in the meta-information schema.

The additional meta-information locator 53 is information which points the location where the information of the attribute that cannot be described is stored, if there is information of the attribute which has a large data size and therefore cannot be described in the additional meta-information 52. This additional meta-information locator may be described if necessary.

The content locator 54 is information which points the location of content data which is defined in the meta-information of the predetermined transfer format.

The additional meta-information locator 53 and the content locator 54 are each constituted by, for example, a locator type 58 and a locator 59. The locator 59 stores, for example, a URL (Uniform Resource Locator) at which a pointed content is stored, an ID (transport ID, PID, service ID, event ID, tale ID) of the transport stream of MPEG in which a pointed content is contained, a DVB (Digital Video Broadcasting) data in which a pointed content is contained, a carousel ID of data carousel, a module ID, or the like. The locator type 58 is information indicating the type of data of the locator 59.

As described above, meta-information of a predetermined transfer format is described with use of a mask pattern which defines attributes of content data by a meta-information schema of a predetermined transfer format. Therefore, it is possible to transfer meta-information and a meta-information schema with an improved filtering efficiency and also with an improved transfer efficiency, so data can be provided efficiently and selectively received with flexibility. In addition, in case where meta-information is filtered by the receiver side, necessary meta-information can be obtained from many pieces of meta-information at a high speed.

Next, a method of generating profile information in the receiver terminal 13 will be explained, and contents of data receiver processing will be explained in more details.

At first, the meta-information schema storage section 33 of the receiver terminal 13 stores meta-information converted into a predetermined transfer format by the meta-information schema converter section 25 of the broadcasting station 11.

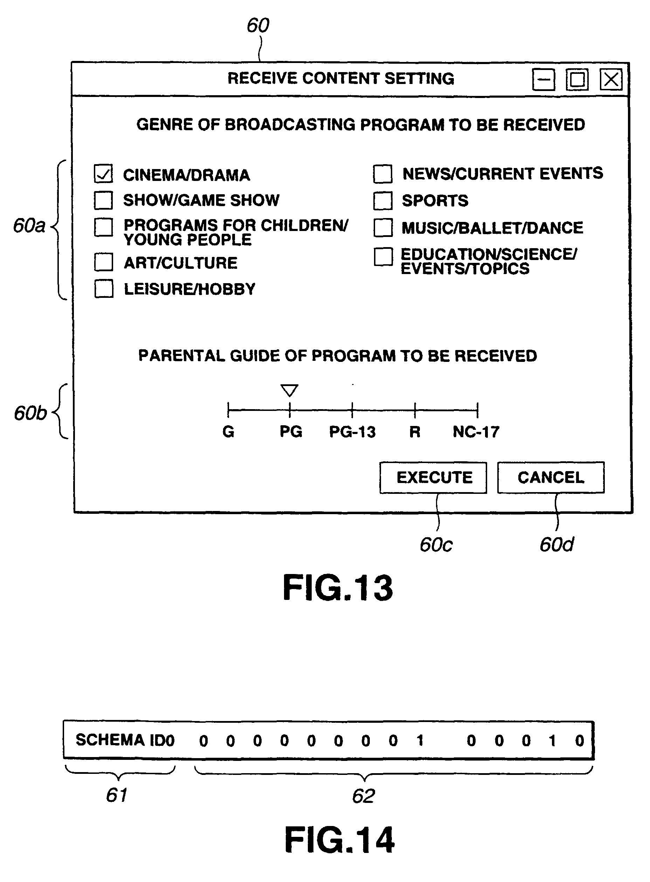

The profile generator section 34 is supplied with a meta-information schema of the predetermined transfer format stored in the meta-information schema storage section 33. For example, the section 34 is supplied with a meta-information schema as shown in FIG. 6, which is obtained by converting a meta-information schema based on the PICS data model into a predetermined transfer format. The profile generator section 34 refers to the supplied meta-information schema, and displays a dialog box 60 for inputting selection information titled "receive content setting", for example, as shown in FIG. 13, on the monitor 34a.

Information for setting a genre of a television program to be received is displayed in a region 60a of the dialog box 60. Also, in the region 60b of the dialog box 60, a slider for setting a parental guide of a television program to be received is displayed. Further, an execute button 60c for starting execution of generation of profile information based on the contents and a cancel button 60d for canceling the set contents are displayed in this dialog box 60.

A user selects attributes of a television program which the user desires to watch, and inputs selection information to the profile generator section 34. The profile generator section 34 generates profile information based on the selection information inputted by the user.

Suppose that a user selects "Cinema/Drama" as a genre of a television program with use of the dialog box 60 and selects "PG" as a parental guide. In this case, when the user clocks the selection button 60c of this dialog box 60, the profile generator section 34 compares information (e.g., "Genre: Cinema/Drama" and "Parental Guide: PG" in this case) selected by the user with a meta-information schema of a predetermined transfer format (e.g., a meta-information schema shown in FIG. 6), thereby to generate profile information for filtering the meta-information selected by the user. Specifically, as shown in FIG. 14, this profile information is constituted by a schema ID 61 for identifying meta-information of the predetermined transfer format referred to and a filtering mask pattern 62 described in the meta-information schema. For example, in this case, "0" as the schema ID 61, binary bits of "000000001" corresponding to "Genre: Cinema/Drama" as the filtering mask pattern 61, and binary bits of "00010" corresponding to "Parental Guide: PG" are described, disposed in line.

This profile information has a description format common to that of the meta-information (which is shown in FIG. 9) converted into a predetermined transfer format. Therefore, the profile information thus generated is sent to the user profile storage section 35, and the meta-information filter section 36 refers to stored profile information, thereby to enable filtering of the meta-information.

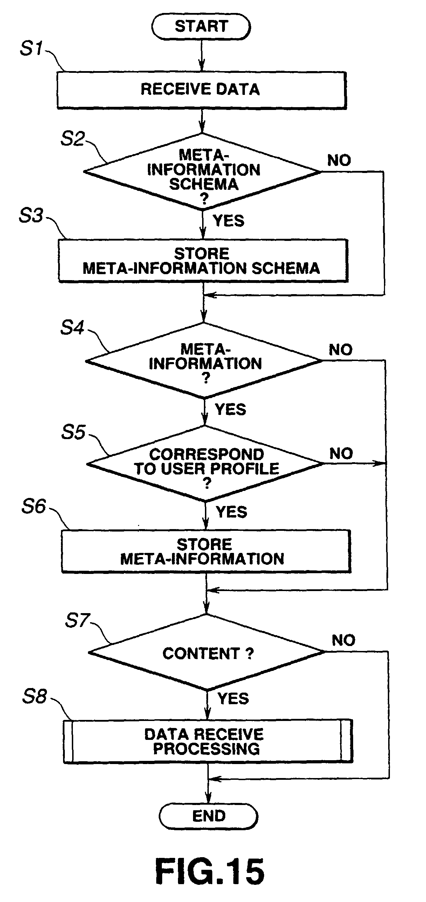

A flowchart showing the contents of processing by this receiver terminal 13 is shown in FIG. 15.

At first, when any data is transmitted to a receiver terminal 13 through a multiple-address network 2 or an interactive network 3, the receiver section 31 or the communication control section 32 thereof receives data transmitted from a broadcasting station 11 or an information providing apparatus 12 (step S1).

Subsequently, the receiver section 31 or the communication control section 32 refers to the information type 40 and determines whether or not received data is a meta-information schema (step S2). If the received data is a meta-information schema, the receiver section 31 or the communication control section 32 sends the received data to the meta-information schema storage section 33, and the meta information schema storage section 33 stores the meta-information schema (step S3).

Subsequently, the receiver section 31 or the communication control section 32 refers to the information type 50 and determines whether the received data is meta-information (step S4).

The receiver section 31 and the communication control section 32 sends the received data to the meta-information filter section 36 if the received data is meta-information. The meta-information filter section 35 compares whether or not the meta-information thus sent and the profile information stored in the user profile storage section 35 correspond to each other (step S5). If the received meta-information corresponds to the profile information as a result of comparison, the meta-information filter section 36 sends the meta-information corresponding to the profile information, to the information storage section 37, and the meta-information storage section 37 stores the meta-information (step S6).

Subsequently, if the received data is not meta-information, the receiver section 31 or the communication control section 32 determines whether or not the received content data is content data (step S7).

If the received data is content data, the receiver terminal 12 performs data receiving processing of the content data (step S8). Also, the receiver terminal 12 terminates the processing as long as the received data does not correspond to the profile information, even if the received data is not any of a meta-information schema, meta-information, and content data.

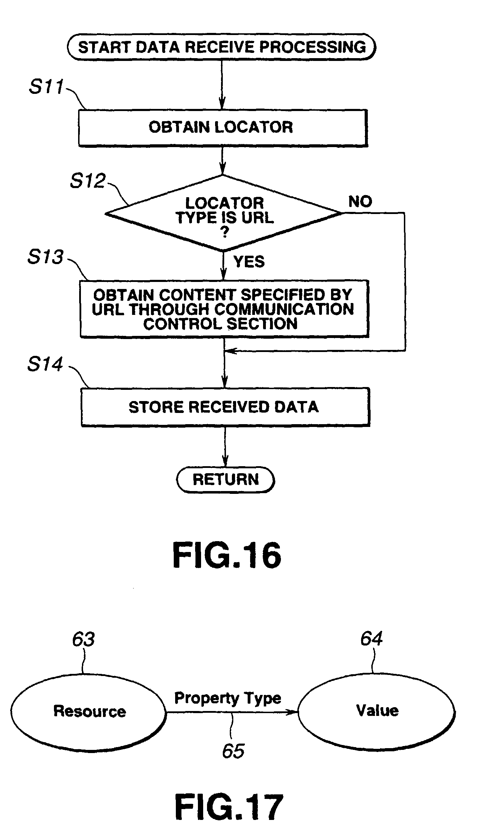

The processing for receiving content data, shown in the step S8, will be more specifically explained with reference to the flowchart shown in FIG. 16.

If the receiver section 31 or the communication control section 32 determines the received data as content data, the content data receiver section 38 obtains a content locator (e.g., the content locator 54 shown in FIG. 8) described in the meta-information (step S11).

Subsequently, the content data receiver section 38 refers the type of locator of the content locator (e.g., the type of locator 58 shown in FIG. 12) and determines whether or not the type of the locator is URL (step S12).

Subsequently, if the type of the locator is URL, the content data receiver section 38 operates to obtain content data specified by the URL described in the locator from the information providing apparatus 12, for example, through the communication control section 32 (step S13).

Further, the content data receiver section 38 sends the obtained content data to the content data storage section 39, and the content data storage section 39 stores the content data (step S14).

As has been described above, in the content providing system 1 according to an embodiment of the present invention, a meta-information schema indicating the data configuration of meta-information is previously transmitted to the receiver terminal 13 and the meta-information schema is set in a predetermined transfer format. Therefore, meta-information can be smoothly received, regardless of the type of the meta-information appended to the content to be received. In addition, in the content providing system 1, meta-information is expressed by a simple bit mask, so the amount of information to be transferred as meta-information is reduced. Further, in the content providing system, profile information is generated with use of a meta-information schema described in a predetermined transfer format, and the profile information is used to filter meta-information expressed by a bit mask of the predetermined transfer format. Therefore, meta-information to be selectively received can be filtered at a high speed.

Note that, in the content providing system 1, the broadcasting station 11 and the information providing apparatus 12 each comprise a meta-information converter section 24 and a meta-information schema converter section 25. These sections 24 and 25 may be comprised in the receiver terminal 13. In this case, the broadcasting station 11 and the information providing apparatus 12 each transmit directly meta-information and a meta-information schema stored in the meta-information storage section 22 and the meta-information schema storage section 23, without converting the meta-information and meta-information schema into a predetermined transfer format. In the receiver terminal 13, these conversions may be performed by providing the meta-information schema converter section 25 between the meta-information schema storage section 33 and the profile generator section 34, and by meta-information converter section 24 between the receiver section 31 and the meta-information filter section 36.

As has been explained above, the embodiment of the present invention has been explained mainly based on an example in which meta-information and a meta-information schema based on a PICS data model are converted into a predetermined transfer format. However, this content providing system 1 is capable of also converting meta-information and a meta-information schema based on a RDF data model. In the following, explanation wilt be made of an example in which meta-information and a meta-information schema based on the RDF data model are converted into a predetermined transfer format.

FIG. 17 shows a RDF data mode. The RDF data model is expressed as an oriented graph of two nodes of the Resource 63 and the Value 64 and the Property Type 65 expressing the relationship between these nodes. It is possible to describe the hierarchical relationship between the nodes, based on the RDF data model.

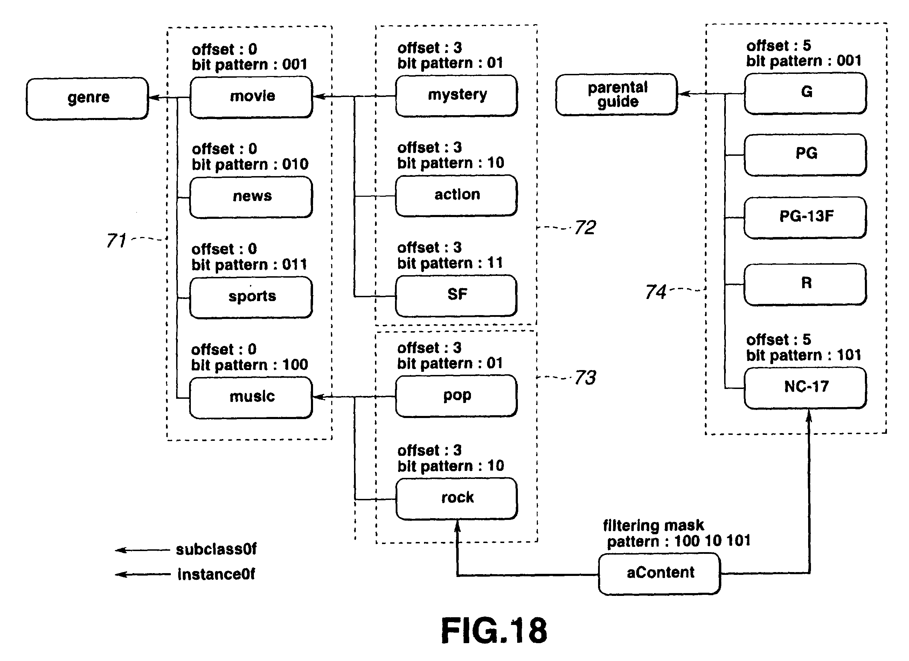

FIG. 18 shows a program genre hierarchy description and a parental guide hierarchy description, a bit pattern showing a mask pattern 44 for generating a filtering mask pattern 56 after converting the information of these descriptions into a predetermined format by the meta-information schema converter section 25, a mask pattern 44, and a filtering mask bit pattern 56 for a content.

The program genre based on the RDF data model includes four classes 71 of movie, news, sports, and music. The class of movie further includes three sub-classes 72 of mystery, action, and SF. The class of music includes two sub-classes 73 of pop and rock. Each of these two classes thus has a hierarchical structure.

Also, a parental guide based on a RDF data model includes five classes 74 of G, PG, PG-13, R, and NC-17.

The contents of this class hierarchical structure based on the RDF data model are translated by the meat-information schema converter section 25 and are converted into a meta-information schema of a predetermined format. In addition, the meta-information converter section 24 converts the meta-information based on this RDF data model into meta-information of the predetermined transfer format.

In this case, information required when converting the meta-information based on the RDF data model into meta-information of the predetermined transfer format are a bit pattern expressing each node, and an offset value indicating the position at which the required information is stored in the entire filtering mask pattern 56. Examples of these values are shown at offsets and bit patterns in FIG. 18.

Consider now that information indicating that a program genre of a content is rock and a parental guide thereof is NC-17 is converted into a filtering mask bit pattern 56 by the meta-information converter section 24.

At first, contents of meta-information of the RDF data model are translated by the meta-information schema converter section 25, and bit patterns and offset values as shown in FIG. 18 are assigned previously to nodes, respectively.

Specifically, a bit pattern indicating meta-information of a content is prepared as follows.
1) Since the genre is rock, the bit pattern "10" is stored from the position of the offset value 3 assigned to the node of rock. Since this offset value indicates the position at which the information is stored in the entire filtering mask pattern 56, the bit pattern "10" is arranged as follows. Note that "XXX" indicates a part where the bit pattern stored at the position is not determined at this time point.
   -> XXX 10
2) Since there is a parent class with respect to the program genre of rock and the parental class is music, a bit pattern "100" is stored from the position of the offset value "0".
   -> 100 10
3) Since the parental guide is NC-17, a bit pattern "101" is stored from the position of the offset value "5".
   -> 100 10 101

As described above, meta-information of aContent is converted into information "10010101" to be stored in the filtering mask pattern 56.

This filtering mask pattern 56 is stored together with a schema ID 55, into the meta-information filtering mask 51 shown in FIG. 9, and is further used as meta-information for digital broadcasting based on MPEG2.

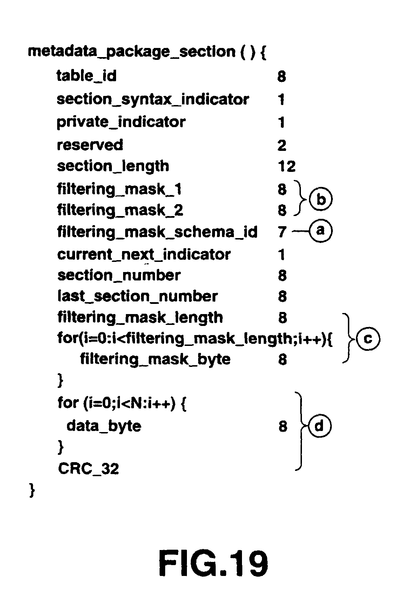

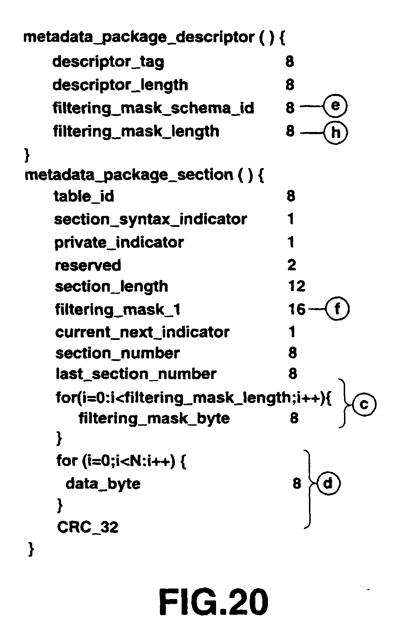

In the content providing system 1, it is thus possible to convert meta-information based on a RDF data model into a predetermined transfer format. Therefore, in the content providing system 1, pieces of meta-information which have no compatibility between their own description formats can be unified and transferred. Next, FIG. 19 shows an example of a format for storing a filtering mask bit pattern into a data stream of a section format according to the MPEG-2 system or particularly of a private section format. Note that the numbers such as "8" and "1" in FIG. 19, as well as the numbers in FIG. 20, each indicate the byte length of stored data.

An identification ID of this metadata_package_section is stored in the table_id. A flag indicating use or non-use of the metadata_package_section is stored in the senction_syntax_indicator. A flag indicating that information defined by a user is stored in this metadata_ package_section is stored in the private_indiator. Code length information of the entire metadata_ package_section is stored in the section_length. A flag indicating whether the metadata_package_section described herein is valid or not at the current time point is stored in the current_next_indiator. The section_number indicates the section number of this metadata_package_section. The last_section_number indicates the number of the last section.

An identification ID for identifying a meta-information schema is stored in the filtering_mask_schema_id (denoted at (a) in FIG. 19). From the structure of the meta-information schema identified by this identification ID, it is possible to identify which meta-information is stored at which part of the filtering mask bit sequence. Also, information of the filtering mask 56 is divided and stored in the regions of filtering_mask_1, filtering_mask_2 (denoted at (b) in Fig. 19) and filtering_mask_length ∼ filtering_mask_byte (denoted at (c) in FIG. 19).

The regions of filtering_mask and filtering_mask_2 can be subjected to hardware filtering based on a demultiplexer. By storing information which particularly requires high-speed filtering among pieces of meta-information, the structure can be arranged so as to perform more efficient filtering.

The regions of for (i = 0; i <N; i ++) ∼ CRC_32 (denoted at (d) in Fig. 19) stores pointer information and the like of a content added with meta-information, e.g., information equivalent to the additional meta-information locator 53, the content locator 54, and the like shown in FIG. 8.

Next, FIG. 20 shows another example of a format when storing a filtering mask bit pattern into a data stream of a section format according to the MPEG-2 system or particularly of a private section format.

The metadata_package_descriptor () is stored in the PMT (Program Map Table) in the PSI (Program Specific Information) of the MPEG-2 system and indicates information of a stream by which the metadata_package_section is transferred.

An identification ID for identifying a meta-information schema is stored in the filtering_madk_schema_id (denoted at (e) in FIG. 20). Bit length information of the filtering mask is stored in the filtering _mask_length (denoted at (h) in FIG. 20).

Further, the meta-information schema referred to by the metadata_package_section is identified. As a result, it is not necessary to add the filtering_mask_schema_id to every metadata_package_section like in the case shown in FIG. 19. Therefore, the efficiency of encoding is more increased. Of course, the format of the metadata_package _section flowing in one stream is limited to one.

Information of the filtering mask 56 is divided and stored in the regions of filtering_mask (denoted at (f) in FIG. 20) and filtering_mask_length ∼ filtering_mask_byte (denoted at (c) in FIG. 20). The region of the filtering_mask can be subjected to hardware filtering by a demultiplexer. By storing information which particularly requires high-speed filtering among pieces of meta-information, the structure can be arranged so as to perform more efficient filtering.

The regions of for (i = 0; i <N; i ++) ∼ CRC_32 (denoted at (d) in Fig. 20) stores pointer information and the like of a content added with meta-information, e.g., information equivalent to the additional meta-information locator 53, the content locator 54, and the like shown in FIG. 8. The length of the filtering mask in the regions of for (i =0; i <N; i ++) ∼ CRC_32 is indicated by the filtering_mask_length (denoted at (h) in FIG. 20).

As has been described above, in the content providing system according to the embodiment of the present invention, a meta-information schema indicting the data configuration of the meta-information is transmitted to a receiver terminal 13. Therefore, data can be smoothly received regardless of the type of the meta-information appended to the content to be received. In addition, in the content providing system 1, it is possible to improve, for example, the compatibility with the meta-information description format on the internet by converting meta-information and a meta-information schema based on a RDF data model into a predetermined format. Also, as has been described above, transfer of meta-information in digital broadcasting is enabled by converting meta-information into a bitmap which achieves a high transfer efficiency and a high filtering efficiency and by storing the bit map into a private section of the MPEG-2 system. By thus storing the bitmap into the private section of the MPEG-2 system, high-speed filtering of meta-information is enabled with use of hardware filtering by a demultiplexer.

## Claims

1. A content providing system comprising a content providing apparatus and a content receiver apparatus,
wherein the content providing apparatus includes
providing means for providing a content signal to the content receiver apparatus,
meta-information storage means for storing meta-information concerning the content signal,
providing-side meta-information schema storage means for storing a meta-information schema indicating a data configuration of the meta-information, and
transmitter means for transmitting the meta-information and the meta-information schema to the content receiver apparatus through a communication channel, and
wherein the content receiver apparatus includes
receiver means for receiving the meta-information and the meta-information schema transmitted from the transmitter means of the content providing apparatus,
receiving-side meta-information schema storage means for storing the meta-information schema received by the receiver means, and
meta-information data configuration detector means for detecting a data configuration of the meta-information received by the receiver means, based on the meta-information schema stored in the receiving-side meta-information schema.

2. A content providing system according to claim 1, wherein the meta-information schema contains an ID for identifying the meta-information schema itself, and data configuration information which indicates a data configuration concerning meta-information including a plurality of articles.

3. A content providing system according to claim 1,
wherein the content providing apparatus further includes
meta-information schema converter means for converting the meta-information schema into transfer information of a predetermined transfer format, and
meta-information converter means for converting the meta-information into a transfer format corresponding to the meta-information schema converted into the transfer information of the predetermined transfer format, and
wherein the transmitter means transmits the meta-information schema converted by the meta-information schema converter means, and the meta-information converted by the meta-information converter means.

4. A content providing system according to claim 3, wherein the meta-information schema contains an ID for identifying the meta-information schema itself, and data configuration information indicating a data configuration concerning meta-information including a plurality of articles.

5. A content providing system according to claim 4, wherein the meta-information schema converter means converts the meta-information schema into an ID for identifying the meta-information schema and filtering mask values corresponding to the plurality of articles, as the predetermined transfer format.

6. A content receiver apparatus according to claim 1, wherein the content receiver apparatus includes
profile generator means for generating a profile for selecting desired meta-information from a plurality of pieces of meta-information, based on the meta-information schema stored in the receiving-side meta-information schema storage means and inputted selection information,
meta-information selection means for selecting meta-information relating to the profile, from a plurality of pieces of meta-information received by the receiver means, and
content signal selection means for selecting a content signal relating to meta-information selected by the meta-information selection means, from a plurality of content signals received by the receiver means.

7. A content providing system according to claim 6, wherein the content receiver apparatus further includes content signal storage means for storing content signal selected by the content signal selection means.

8. A content providing system according to claim 6, wherein the content receiver apparatus further includes analysis means for analyzing content of the meta-information, based on the data configuration of the meta-information stored into the receiving-side meta-information schema storage means.

9. A content providing apparatus comprising
providing means for providing a content signal to a content receiver apparatus,
meta-information storage means for storing meta-information concerning the content signal,
meta-information schema storage means for storing a meta-information schema indicating a data configuration of the meta-information, and
transmitter means for transmitting the meta-information and the meta-information schema to the content receiver apparatus through a communication channel.

10. A content providing apparatus according to claim 9, wherein the providing means transmits the content signal to the content receiver apparatus through the communication channel.

11. A content providing apparatus according to claim 9, further comprising content signal storage means for storing the content signal.

12. A content providing apparatus according to claim 9, wherein the meta-information schema contains an ID for identifying the meta-information schema itself, and data configuration information indicating a plurality of articles.

13. A content providing apparatus according to claim 9, further comprising
meta-information schema converter means for converting the meta-information schema into a predetermined transfer format, and
meta-information converter means for converting the meta-information into the predetermined transfer format,
wherein the transmitter means transmits the meta information schema converted into the predetermined transfer format by the meta-information schema, and the meta-information converted into the predetermined transfer format by the meta-information converter means.

14. A content providing apparatus according to claim 13, wherein the meta-information schema contains an ID for identifying the meta-information schema itself, and data configuration information indicating a data configuration concerning meta-information containing a plurality of articles.

15. A content providing system according to claim 14, wherein the meta-information schema converter means converts the meta-information schema into an ID for identifying the meta-information schema and filtering mask values corresponding to the plurality of articles, as the predetermined transfer format.

16. A content receiver apparatus comprising
meta-information schema storage means for storing a meta-information schema indicating a data configuration of meta-information concerning a content signal,
receiver means for receiving the content signal and meta-information concerning the content signal through a communication channel, and
meta-information data configuration detector means for detecting a data configuration of the meta-information received by the receiver means, based on the meta-information schema stored in the meta-information schema storage means.

17. A content receiver apparatus according to claim 16,
wherein the receiver means receives the meta-information schema transmitted through the communication channel, and
the meta-information schema storage means stores the meta-information schema received by the receiver means.

18. A content receiver apparatus according to claim 16, further comprising
profile generator means for generating a profile for selecting desired meta-information from a plurality of pieces of meta-information, based on the meta-information schema stored in the meta-information schema storage means and inputted selection information,
meta-information selection means for selecting meta-information relating to the profile, from a plurality of pieces of meta-information received by the receiver means, and
content signal selection means for selecting a content signal relating to meta-information selected by the meta-information selection means, from a plurality of content signals received by the receiver means.

19. A content receiver apparatus according to claim 18, further comprising content signal storage means for storing the content signal selected by the content signal selection means.

20. A content receiver apparatus according to claim 16, further comprising analysis means for analyzing content of the meta-information, based on the data configuration of the meta-information detected from the meta-information schema by the meta-information configuration detector means.

21. A method of receiving meta-information comprising steps of
transmitting a meta-information schema indicating a data configuration of meta-information concerning a content signal to a content receiver apparatus through a communication channel,
transmitting the meta-information to the content receiver apparatus through the communication channel, and
providing the content signal to the content receiver apparatus.

22. A method of receiving meta-information, comprising steps of
receiving a meta-information schema indicating a data configuration of meta-information concerning a content signal,
receiving the meta-information, and
detecting a data configuration of the received meta-information, based on the meta-information schema.
